# EUROPEAN PATENT SPECIFICATION

(11) **EP 0 570 055 B1**
(45) Date of publication and mention of the grant of the patent: **12.08.1998**
(21) Application number: 93201280.0
(22) Date of filing: 05.05.1993
(51) Int. Cl.: C08G 67/02

(54) **Polyketone polymers**
Polyketonpolymere
Polycétones

(30) Priority: 07.05.1992 EP 92201303
(43) Date of publication of application: 18.11.1993
(73) Proprietor: SHELL INTERNATIONALE RESEARCH MAATSCHAPPIJ B.V., 2596 HR Den Haag (NL)
(72) Inventor: Drent, Eit, NL-1031 CM Amsterdam (NL); Wang, Pen-Chung, c/o Shell Developm. Co., Houston, Texas 77002 (US)

(56) References cited:
- EP-A- 0 272 727
- EP-A- 0 357 101

## Description

This invention relates to new polyketone polymers and to a process for the preparation of these new polyketone polymers.

The class of polymers of carbon monoxide and olefin(s) has been known for a number of years. For instance, US patent No. 5,049,650 relates to the preparation of polyesters or polyanhydrides by reacting a non-conjugated diene such as 1,5-hexadiene or 1,7-octadiene with carbon monoxide and a diol (hydroquinone) or a dicarboxylic acid (adipic acid) in the substantial absence of water and in the presence of a catalytic system obtainable by combining (a) a palladium(II) compound, such as palladium acetate; (b) a monodentate optionally mixed with a bidentate; and (c) a protonic acid having a pKa of less than 2. US patent No. 4,940,777 relates to the preparation of linear alternating copolymers of carbon monoxide and a 1,2-alkadiene by reacting the monomers under polymerization conditions in the presence of a catalyst composition formed from a palladium compound, the anion of a non-hydrohalogenic acid having a pKa less than 4 and a bidentate ligand of nitrogen. Further, from European Patent application No. 121,965 a process is known for the preparation of polyketones by polymerizing a mixture of CO and an alkenically unsaturated hydrocarbon in the presence of a catalyst obtainable by combining a palladium, cobalt or nickel compound, an anion of an acid with a pKa of less than 2, provided it is neither a hydrohalogenic acid nor carboxylic acid, and a bidentate ligand of the general formula R¹R²M―R―MR³R⁴, which M represents phosphorus, arsenic or antimony, R represents a divalent organic bridging group having at least two carbon atoms in the bridge, none of these carbon atoms carrying substituents that may cause steric hindrance and in which R¹, R², R³ and R⁴ are identical or different hydrocarbon groups.

The polymers disclosed in US patent 4,940,777 and European patent application No. 121,965, now commonly known as polyketones or polyketone polymers, are relatively high molecular weight materials having established utility as thermoplastics in the production of shaped articles by the methods conventionally employed with thermoplastics.

The polyketone polymers, by virtue of the presence of carbonyl groups, can be converted into other types of polymer to modify the properties of the polyketone. The carbonyl groups can undergo a number of conventional reactions to produce polymeric derivatives such as polyols, polythiols and polyamines. It is desirable, on occasion, to provide polyketone-type polymers with further functional groups. The invention accordingly sets out to provide novel polyketone polymers which incorporate further functional groups, and a process of producing such polymers.

More specifically, the invention provides polyketone polymers comprising a repeating structure of the general formula (I), 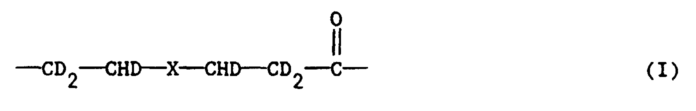 wherein each D, independently, represents a hydrogen atom or an alkyl group of up to 4 carbon atoms and X represents a divalent bridging group of the general formula (III), or of the general formula (IV), 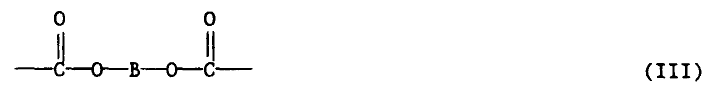 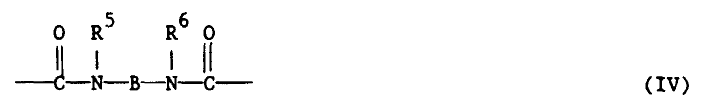 wherein R⁵ and R⁶ independently are hydrogen or an alkyl group of up to 4 carbon atoms and B represents an inert divalent bridging group. X represents preferably a bridging group of the general formula (III). Suitably, B represents an alkylene group containing 2-10 carbon atoms, in particular 2-6 carbon atoms. B is preferably a n-alkylene group. Most preferably, B is a 1,4-butylene group.

Alternatively, X is an optionally substituted aromatic divalent bridging group, suitably, but not restricted to, paraphenylene.

The molecular weight of the polyketone polymer of this invention may vary between wide limits, dependent on the application envisaged. Suitably it may have a number-average molecular weight between 100 and 100,000, more suitably between 1000 and 50,000.

Suitably, the novel polyketone polymers are produced by a process comprising polymerizing carbon monoxide and hydrogen with one or more diolefins of the general formula (V),

CD₂=CD―X―CD=CD₂ (V)

wherein X and D have a meaning as defined hereinbefore, which polymerization is carried out in the presence of a catalyst based upon a group VIII metal, preferably palladium; a bidentate ligand of the general formula R¹R²M―R―MR³R⁴, in which M represents phosphorus, arsenic or antimony, phosphorus being preferred, in which R represents a divalent organic bridging group having at least two carbon atoms in the bridge, none of these carbon atoms carrying substituents that may cause steric hindrance and in which R¹, R², R³ and R⁴ are identical or different hydrocarbyl groups; a weakly or non-coordinating anion; and optionally a quinone.

In view of numerous possible side-reactions, it is quite surprising that the polymers in accordance with the present invention, and of substantial molecular weight too, can be prepared at all. For instance, instead of the polymerization/propagation reaction, the reaction could proceed (and terminate) via hydrogenation, hydroformylation (substitution by carbon monoxide and hydrogen), and/or hydrogenolysis (chain scission by hydrogen substitution), which reactions would lead to low molecular weight material.

It will be appreciated that the extent of occurrence of the above propagation reaction depends on the composition of the monomer feed, the composition of the catalyst, as well as the reaction conditions (temperature, pressure and reaction time). A skilled person will be able to establish by routine experimentation the conditions for an optimal yield of the polyketones according to this invention.

The diolefin feed, as is evident from the polyketone polymer definition, very suitably comprises compounds being di-substituted with vinyl groups. However, not every compound containing two vinyl groups is a suitable monomer; when a divinylester of a dicarboxylic acid is used, surprisingly, the reaction occurs essentially in the form of hydroformylation, rather than polymerization.

Preferred monomers, which are easily converted into the polymer and which are sufficiently available, are diesters of acrylic acid. Alternatively, diamides of acrylic acid may be used. They may be prepared in sufficient purity from aliphatic or aromatic diols and/or diamines.

It is appreciated that the use of ester or amide products of alkylacrylic acids are included, insofar as the alkyl, optionally substituted, does not sterically or electronically hinder the polymerization of the monomer. The e.g., esters of ethacrylic acid or methacrylic acid are suitable, whereas it is expected that the esters of tert-butylacrylic acid or trifluoromethacrylic acid will rather provide a low yield of polyketone polymer. Hence, the groups D are preferably hydrogen atoms or unsubstituted n-alkyl groups, in particular methyl or ethyl groups.

Suitable catalyst compositions have already been subject of many patent applications, and it is preferred to employ a catalyst composition such as disclosed in US patent No. 4,849,542, herewith enclosed by reference, which patent concerns a process for the preparation of oxo-alkanedioic acids or diesters thereof. It is appreciated, however, that this document does neither describe nor teach the usefulness of the catalyst system for the present polymerisation process.

Preferred catalyst compositions comprise palladium and/or a palladium compound as a source of the group VIII metal; a compound containing a weakly or non-coordinating anion such as an anion of an acid having a pKa of less than 3.5 (measured at 18 °C in aqueous solution), provided it is not a hydrohalogenic acid; and a bidentate ligand of the general formula R¹R²M―R―MR³R⁴, which M represents phosphorus, arsenic or antimony, phosphorus being preferred, R represents a divalent organic bridging group having at least two carbon atoms in the bridge, none of these carbon atoms carrying substituents that may cause steric hindrance and in which R¹, R², R³ and R⁴ are identical or different hydrocarbyl groups.

The palladium compound is preferably a palladium salt. Examples of salts include salts of nitric acid; sulphuric acid; sulphonic acids, for example chlorosulphonic acid, methanesulphonic acid, trifluoromethane sulphonic acid, t-butylsulphonic acid, p-toluenesulphonic acid, or a sulphonated ion exchange resin; and a carboxylic acid, for example an alkanoic acid such as acetic acid or trifluoro acetic acid.

The quantity of palladium is not critical. Preferably the quantity of palladium is in the range of from 10⁻⁷ to 10⁻¹ gram atom of Pd per mole of olefinically unsaturated compound, more preferably from 10⁻⁶ to 10⁻².

The source of a diphosphine is conveniently the diphosphine itself, or an acid addition salt of the diphosphine. It may also be a complex of the diphosphine with palladium.

In the general formula of a preferred diphosphine, R¹R²P―R―PR³R⁴ each of R¹, R², R³ and R⁴ independently represents an optionally substituted aliphatic group, suitably having from 1 to 20 carbon atoms, preferably from 1 to 10 carbon atoms, or one or both pairs of R¹ and R², and R³ and R⁴ independently represent an optionally substituted divalent aliphatic group, and R is as defined hereinbefore. Preferred alkyl groups have 1-4 carbon atoms, such as ethyl, n-propyl, i-butyl and n-butyl. Examples of suitable alkylene groups include hexamethylene and cyclooctylene.

When the alkyl group is said to be optionally substituted, it may be substituted by one or more substituents which do not annihilate the catalytic activity of the system. Suitable substituents include halogen atoms, alkoxy groups, haloalkyl groups, haloalkoxy groups, acyl groups, acyloxy groups, amino groups, hydroxyl groups, nitrile groups, acylamino groups, and aryl groups.

The bridging group represented by R is preferably an alkylene group which is optionally interrupted by one or more oxygen and/or sulphur atoms, as in:
-CH₂CH₂-; -CH₂CH₂CH₂-; -CH₂OCH₂-; -CH₂SCH₂-; -CH₂CH₂CH₂CH₂-; -CH₂CH₂OCH₂CH₂-; -CH₂CH₂SCH₂CH₂-; -CH₂CH₂OCH₂CH₂OCH₂CH₂-; 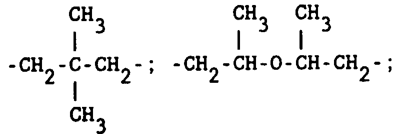 or it may be a silane residue:

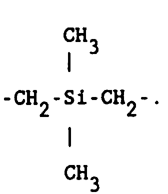

The bridging group preferably contains from 2 to 8 atoms in the bridge, more preferably from 3 to 5 atoms. For example, when the bridging group is a propylene or neopentylene group, the bridge contains 3 atoms. Most preferably the bridging group is a trimethylene or a tetramethylene group.

Examples of diphosphines which may be used in the polymerisation according to the invention are:
1,2-bis(di-n-butylphosphino)ethane,
1,3-bis(dimethylphosphino)propane,
1,3-bis(diethylphosphino)propane,
1,3-bis(di-i-propylphosphino)propane, and
1,4-bis(di-i-propylphosphino)butane.

The ratio of the number of moles of the diphosphine per gram atom of palladium is preferably in the range of from 0.50 to 10, more preferably from 0.9 to 5, especially from 1 to 3.

The source of an anion, used in the process of the invention is preferably a protonic acid. However, it may also be a salt of palladium or a salt of another metal, for example of vanadium, chromium, nickel, copper or silver.

Typical weakly or non-coordinating anions, by which is meant that little or no covalent interaction occurs between palladium and the anion, include anions derived from acids having a pKa below 3.5, preferably below 2, such as sulphuric acid; benzenesulphonic acid, p-toluenesulphonic acid, methanesulphonic acid, trifluoromethanesulphonic acid, perchloric acid, trichloroacetic acid or trifluoroacetic acid, or an acid derived by the interaction of a Lewis acid, such as BF₃, PF₅, AsF₅, with a Broensted acid, such as HF (e.g. fluorosilicic acid, HBF₄, HPF₆, HSbF₆). The source of anions may also be an acidic ion exchange resin, for example a sulphonated ion exchange resin. Very suitable sources of non-coordinating anions are Ni(CF₃SO₂)₂ or Ni(ClO₄)₂.

The number of moles of anion present in the polymerization mixture per gram atom of palladium present is not critical. Preferably the anion is present in a quantity of from 0.5 to 100, more preferably from 1 to 10 moles per gram atom palladium.

It is preferred that the catalyst system further comprises, as a promoter, a quinone. Examples of suitable quinone promoters include benzoquinones, such as 1,2-benzoquinone, 1,4-benzoquinone and tetrachloro-p-benzoquinone, and naphthoquinones, such as 1,2-naphthoquinone and 1,4-naphthoquinone.

The ratio of moles of quinone promoter to gram atom of palladium is not critical. Preferably it is in the range of from 1 to 1000, more preferably in the range of from 5 to 100.

The catalyst system according to the invention is preferably constituted in a liquid phase. The liquid phase may conveniently be formed by one or more of the reactants with which the catalyst system is to be used. Alternatively, it may be formed by a solvent. Said solvent may, for example, comprise dimethylsulphoxide, sulfolane, hexane, toluene, chloroform, 1,2-dichloroethane, ethyl acetate, acetone or 2,5,8-trioxanonane (also referred to as diglyme). The latter is a preferred solvent.

The process of this invention is conveniently carried out at a temperature in the range of from 20 °C to 200 °C, in particular 50 °C to 150 °C, and a total pressure in the range of from 2 to 100 bar, in particular 20 to 60 bar. Suitably, a molar ratio of carbon monoxide to hydrogen in the range of 0.5:1 to 3:1. It is observed that a surplus of hydrogen may promote hydrogenation to the detriment of polymerization. Accordingly, preferably a molar ratio of carbon monoxide to hydrogen in the range of 1:1 to 2:1 is used. The gaseous reactants may be diluted by an inert gas such as nitrogen. Also, the gaseous reactants may be introduced in one step, or added during the polymerization in a continuous fashion.

Suitably, a molar ratio of the diolefin of the formula V to carbon monoxide in the range of from 0.1:1 to 2:1 is used, in particular from 0.5:1 to 1.5:1.

The process of the invention may be carried out batch-wise, semi-continuously or continuously.

The polyketone polymer products may be isolated from the reaction mixture in any suitable manner, for example by means of precipitation, filtration, extraction etc.

The following example further illustrate the invention. It is not to be construed as limiting the invention. The novel polyketone polymer is characterized by melting point, H-decoupled ¹³C-NMR (using a Brüker WM250 spectrometer), and number-average molecular weight (NMR determined, based on relative end-group abundance).

### Example 1

A polyketone polymer was produced from 1,4-butanediol diacrylate, CO and H₂ by charging under N₂ to a magnetically stirred 300 ml autoclave 40 ml of diglyme, 10 gr 1,4-butanediol diacrylate (50 mmol), and a catalyst formed from 0.25 mmol of Pd(OAc)₂, 0.6 mmol 1,3-bis(diethylphosphino)propane, 1.0 mmol of Ni(CF₃SO₃)₂ and 5 mmol of 1,4-naphthoquinone.

After the autoclave was sealed, the N₂ was removed by evacuation. Then the autoclave was charged with CO until a partial pressure thereof of 30 bar was reached. Next, the autoclave was charged with H₂ until a partial pressure thereof of 20 bar was reached, after which the autoclave was heated at 90 °C for 10 hours. The polymerization was terminated by cooling to room temperature and releasing the pressure. The polymer product was recovered by precipitation, washed with methanol and dried in vacuo at room temperature.

The yield of recovered polyketone polymer was 7.0 gr. It had a number-average molecular weight of about 2500, and a melting range of 75 to 80 °C. The ¹³C-NMR spectrum showed resonance signals at 206.8 ppm (CO, relative intensity corresponding to 1 carbon atom); 172.5 ppm (CO of ester, 2C); 63.9 ppm (2C); 36.8 ppm (2C); 27.7 ppm (2C); and 25.1 ppm (2C) (chemical shifts relative to TMS). From the spectrum it is deduced that in the polymer backbone the units originating in carbon monoxide and the units originating in 1,4-butanediol diacrylate and hydrogen occur in a substantially alternating order.

## Claims

1. Polyketone polymers comprising a repeating structure of the general formula (I), 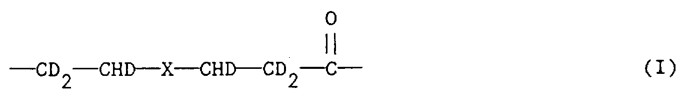 wherein each D, independently, represents a hydrogen atom or an alkyl group of up to 4 carbon atoms and X represents a divalent bridging group of the general formula (III), or of the general formula (IV), 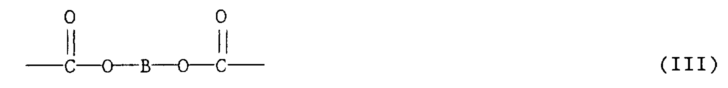 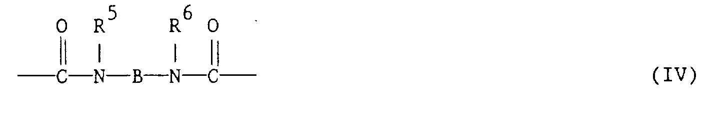 wherein R⁵ and R⁶ independently are hydrogen or an alkyl group of up to 4 carbon atoms and B represents an inert divalent bridging group.

2. Polyketone polymers according to claim 1, wherein the bridging group X is represented by the general formula (III) wherein B represents a n-alkylene group having 2-10 carbon atoms.

3. Polyketone polymers according to claim 2, wherein B is a 1,4-butylene group.

4. A process for preparing polyketone polymers comprising polymerizing carbon monoxide and hydrogen with one or more diolefins of the general formula (V),
CD₂=CD―X―CD=CD₂ (V)
wherein X and D have the meaning as defined in claim 1, which polymerization is carried out in the presence of a catalyst based upon a group VIII metal; a bidentate ligand of the general formula R¹R²M―R―MR³R⁴, in which M represents phosphorus, arsenic or antimony, R represents a divalent organic bridging group having at least two carbon atoms in the bridge, none of these carbon atoms carrying substituents that may cause steric hindrance and R¹, R², R³ and R⁴ are identical or different hydrocarbyl groups; and a weakly or non-coordinating anion.

5. A process as claimed in claim 4, wherein the catalyst comprises palladium as the Group VIII metal.

6. A process as claimed in claim 4 or 5, wherein the non-coordinating anion is an anion of an acid having a pKa below 3.5.

7. A process as claimed in any one of claims 4-6, wherein the bidentate ligand is of the general formula R¹R²P-R-PR³R⁴ in which R is a bridging group containing 3-5 atoms in the bridge and R¹,R²,R³ and R⁴ are alkyl groups having 1-4 carbon atoms.

8. A process as claimed in any one of claims 4 to 7, wherein the catalyst further comprises a quinone.

9. A process as claimed in any one of claims 4-7, which is carried out at a temperature in the range of from 50 to 150 °C and at a pressure in the range of from 20 to 60 bar and wherein carbon monoxide and hydrogen are present at a molar ratio in the range of 1:1 to 2:1.

## Patentansprüche

1. Polyketonpolymere mit einem Gehalt an einer wiederkehrenden Struktur der allgemeinen Formel (I) 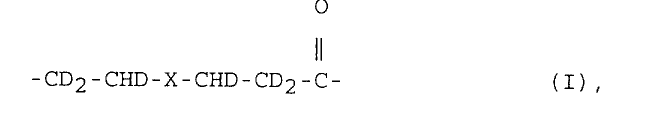 worin jedes D unabhängig ein Wasserstoffatom oder eine Alkylgruppe mit bis zu 4 Kohlenstoffatomen darstellt und X eine zweiwertige Brückengruppe der allgemeinen Formel (III) oder der allgemeinen Formel (IV) 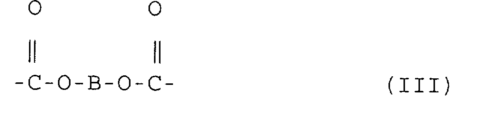 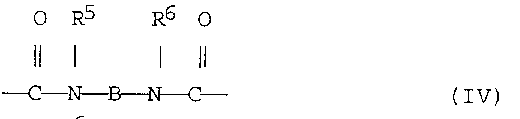 bedeutet, worin R⁵ und R⁶ unabhängig Wasserstoff oder eine Alkylgruppe mit bis zu 4 Kohlenstoffatomen bedeuten und B eine inerte zweiwertige Brückengruppe darstellt.

2. Polyketonpolymere nach Anspruch 1, worin die Brückengruppe X durch die allgemeine Formel (III) dargestellt wird, worin B eine n-Alkylengruppe mit 2 bis 10 Kohlenstoffatomen bedeutet.

3. Polyketonpolymere nach Anspruch 2, worin B eine 1,4-Butylengruppe ist.

4. Verfahren zur Herstellung von Polyketonpolymeren, umfassend ein Polymerisieren von Kohlenmonoxid und Wasserstoff mit einem oder mehreren Diolefinen der allgemeinen Formel
CD₂=CD-X-CD=CD₂ (V),
worin X und D die in Anspruch 1 definierten Bedeutungen aufweisen, welche Polymerisation in Anwesenheit eines Katalysators ausgeführt wird, der auf einem Gruppe VIII-Metall; einem Bidentatliganden der allgemeinen Formel R¹R²M-R-MR³R⁴, worin M für Phosphor, Arsen oder Antimon steht, R eine zweiwertige organische Brückengruppe mit wenigstens zwei Kohlenstoffatomen in der Brücke darstellt, wobei keines dieser Kohlenstoffatome Substituenten trägt, die eine sterische Behinderung hervorrufen können, und R¹, R², R³ und R⁴ gleiche oder verschiedene Hydrocarbylgruppen bedeuten; und auf einem schwach oder nicht-koordinierenden Anion beruht.

5. Verfahren nach Anspruch 4, worin der Katalysator Palladium als das Gruppe VIII-Metall umfaßt.

6. Verfahren nach Anspruch 4 oder 5, worin das nichtkoordinierende Anion ein Anion einer Säure mit einem pKa-Wert unter 3,5 ist.

7. Verfahren nach einem der Ansprüche 4 bis 6, worin der Bidentatligand der allgemeinen Formel R¹R²P-R-PR³R⁴ entspricht, worin R eine 3 bis 5 Atome in der Brücke enthaltende Brückengruppe ist und R¹, R², R³ und R⁴ Alkylgruppen mit 1 bis 4 Kohlenstoffatomen bedeuten.

8. Verfahren nach einem der Ansprüche 4 bis 7, worin der Katalysator zusätzlich ein Chinon umfaßt.

9. Verfahren nach einem der Ansprüche 4 bis 7, das bei einer Temperatur im Bereich von 50 bis 150°C und bei einem Druck im Bereich von 20 bis 60 bar ausgeführt wird und worin Kohlenmonoxid und Wasserstoff in einem Molverhältnis im Bereich von 1:1 bis 2:1 vorliegen.

## Revendications

1. Polymères de polycétone qui comprennent une unité de structure récurrente de la formule générale (I), 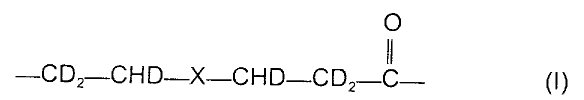 dans laquelle chaque symbole D représente indépendamment un atome d'hydrogène ou un radical alkyle comptant jusqu'à 4 atomes de carbone et X représente un groupe de pontage bivalent de la formule générale (III), ou de la formule générale (IV), 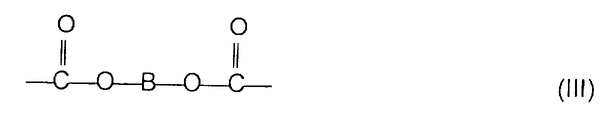 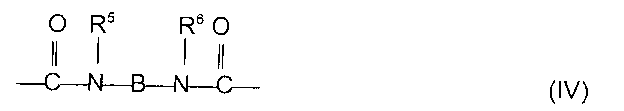 dans lesquelles R⁵ et R⁶ représentent indépendamment chacun un atome d'hydrogène ou un radical alkyle comptant jusqu'à 4 atomes de carbone et B représente un groupe de pontage bivalent inerte.

2. Polymères de polycétones suivant la revendication 1, caractérisés en ce que le groupe de pontage X est représenté par la formule générale (III) dans laquelle B représente un groupe n-alkylène comportant de 2 à 10 atomes de carbone.

3. Polymères de polycétones suivant la revendication 2, caractérisés en ce que B représente un radical 1,4-butylène.

4. Procédé de préparation de polymères de polycétones comprenant la polymérisation du monoxyde de carbone et de l'hydrogène avec une ou plusieurs dioléfines de la formule générale (V),
CD₂= CD―X―CD=CD₂ (V)
dans laquelle X et D possèdent les significations qui leur ont été attribuées dans la revendication 1, laquelle polymérisation est entreprise en présence d'un catalyseur à base d'un métal du groupe VIII; d'un ligand bidentate de la formule générale R¹R²M―R―MR³R⁴, dans laquelle M représente le phosphore, l'arsenic ou l'antimoine, R représente un groupe de pontage organique bivalent, possédant au moins deux atomes de carbone dans le pont, aucun de ces atomes de carbone ne portant des substituants qui peuvent provoquer un empêchement stérique et les symboles R¹, R², R³ et R⁴ représentent des radicaux hydrocarbyle identiques ou différents et d'un anion faible ou non coordinant.

5. Procédé suivant la revendication 4, caractérisé en ce que le catalyseur est constitué de palladium, à titre de métal du groupe VIII,

6. Procédé suivant la revendication 4 ou 5, caractérisé en ce que l'anion non coordinant est un anion d'un acide qui possède un pKa inférieur à 3,5.

7. Procédé suivant l'une quelconque des revendications 4 à 6, caractérisé en ce que le ligand bidentate répond à la formule suivante: R¹R²P-R-PR³R⁴, dans laquelle R représente un groupe de pontage comportant de 3 à 5 atomes dans le pont et les symboles R¹, R², R³ et R⁴ représentent des radicaux alkyle possédant de 1 à 4 atomes de carbone.

8. Procédé suivant l'une quelconque des revendications 4 à 7, caractérisé en ce que le catalyseur comprend en outre une quinone.

9. Procédé suivant l'une quelconque des revendications 4 à 7, caractérisé en ce qu'on l'entreprend à une température qui varie de 50 à 150°C et sous une pression qui fluctue de 20 à 60 bars et en ce que le monoxyde de carbone et l'hydrogène sont présents dans un rapport molaire qui varie de 1:1 à 2:1.
